# DEMANDE DE BREVET EUROPEEN

(11) **EP 2 712 776 A1**
(43) Date de publication de la demande: **02.04.2014**
(21) Numéro de dépôt: 13186400.1
(22) Date de dépôt: 27.09.2013
(51) Int. Cl.: B60S 3/04, B60S 3/06

(54) **Station de lavage de camion et procede de lavage de camion mettant en oeuvre une telle station**

(30) Priorité: 27.09.2012 FR 1259130
(71) Demandeur: Michaud-Grosbenoit, Frédéric, 26400 Grane (FR)
(72) Inventeur: Michaud-Grosbenoit, Frédéric, 26400 GRANE (FR); Daudet, Sébastien, 26400 ALLEX (FR)
(74) Mandataire: Cabinet Plasseraud

(57) **Abrégé**

Station de lavage (1) comprenant un circuit d'alimentation en fluide de lavage et une structure de lavage (10) de l'extérieur du camion reliée audit circuit d'alimentation en fluide de lavage, ladite structure de lavage (10) délimitant un espace ouvert selon une direction longitudinale (X) et adapté pour recevoir le camion placé selon la direction longitudinale (X), ladite structure de lavage (10) étant déplaçable selon la direction longitudinale (X),
dans laquelle la structure de lavage (10) comporte au moins un premier portique (11) équipé d'au moins un premier organe de lavage (18, 19) adapté pour laver une surface extérieure du camion, et un deuxième portique (21) équipé d'au moins un deuxième organe de lavage (25) adapté pour laver la surface extérieure du camion, les premier (11) et deuxième (21) portiques étant déplaçables l'un par rapport à l'autre selon la direction longitudinale (X) entre une position rapprochée et une position écartée.

La station de lavage est conçue et adaptée pour, en outre, comprendre un chariot de lavage de l'intérieur d'une remorque du camion.

## Description

L'invention se rapporte à une station de lavage de camion et à un procédé de lavage de camion mettant en oeuvre une telle station.

En particulier, l'invention s'applique au lavage de l'extérieur d'un camion comprenant un tracteur et une remorque.

Pour réaliser un tel lavage, il est connu d'avoir recours à une station de lavage comprenant une structure de lavage délimitant un espace adapté pour recevoir le camion. La structure de lavage reliée à un circuit d'alimentation en fluide de lavage est généralement déplaçable selon une direction longitudinale selon laquelle le camion est placé.

Les stations de lavage connues de ce type, décrites par exemple dans les documents EP 0 987 156, EP 1 527 968 et EP 1 621 428, ne permettent pas d'adapter aisément le lavage aux différentes parties du camion, et notamment au tracteur et à la remorque.

L'invention vise à résoudre le problème évoqué ci-dessus.

A cet effet, selon un premier aspect, l'invention propose une station de lavage du type précité dans laquelle la structure de lavage comporte au moins un premier portique équipé d'au moins un premier organe de lavage adapté pour laver une surface extérieure du camion, et un deuxième portique équipé d'au moins un deuxième organe de lavage adapté pour laver la surface extérieure du camion, les premier et deuxième portiques étant déplaçables l'un par rapport à l'autre selon la direction longitudinale entre une position rapprochée dans laquelle lesdits premier et deuxième portiques sont à proximité l'un de l'autre et une position écartée dans laquelle lesdits premier et deuxième portiques sont à distance l'un de l'autre, la station de lavage comportant en outre un chariot de lavage de l'intérieur de la remorque du camion relié au circuit d'alimentation en fluide de lavage, ledit chariot de lavage comprenant un châssis déplaçable selon la direction longitudinale, et un dispositif de lavage monté sur le châssis et adapté pour laver une surface intérieure de la remorque.

Ainsi, la station de lavage selon l'invention permet de réaliser un lavage d'une surface extérieure du camion par l'intermédiaire de portiques dédiés présentant des organes de lavage adaptés à différentes parties du camion, tout en réalisant, le cas échéant simultanément au lavage de la surface extérieure, un lavage de l'intérieur de la remorque du camion.. L'adaptabilité de la station et la qualité du lavage s'en trouvent améliorées.

Les premier et deuxième portiques peuvent comprendre chacun au moins un chariot mobile selon la direction longitudinale, et au moins un montant monté sur le chariot, les montants des premier et deuxième portiques portant respectivement les premier et deuxième organes de lavage. Dans la position rapprochée des premier et deuxième portiques, le chariot du deuxième portique peut alors être monté sur le chariot du premier portique.

La station de lavage peut comprendre :
- un unique dispositif d'entraînement relié au premier portique, meneur, pour déplacer ledit premier portique selon la direction longitudinale,
- un dispositif de solidarisation adapté pour, dans un état actif, solidariser le premier portique au deuxième portique, mené, et pour, dans un état inactif, désolidariser les premier et deuxième portiques.

La station de lavage peut comprendre en outre une unité de commande connectée à la structure de lavage et adaptée pour sélectivement :
- commander un déplacement conjoint selon la direction longitudinale des premier et deuxième portiques,
- commander des déplacements indépendants selon la direction longitudinale des premier et deuxième portiques.

En particulier, l'unité de commande peut comprendre un capteur de position adapté pour détecter une extrémité avant de la remorque solidarisée au tracteur, l'unité de commande étant adaptée pour :
- commander le déplacement conjoint selon la direction longitudinale des premier et deuxième portiques dans leur position rapprochée, sur la remorque depuis une extrémité arrière de la remorque opposée à l'extrémité avant, jusqu'à l'extrémité avant,
- lorsque le capteur de position détecte l'extrémité avant de la remorque, faire passer les premier et deuxième portiques de leur position rapprochée à leur position écartée, et commander le déplacement selon la direction longitudinale du premier portique sur le tracteur, le deuxième portique restant sur la remorque.

La structure de lavage peut être déplaçable selon la direction longitudinale selon une course entre des première et deuxième extrémités opposées, la station de lavage comprenant une butée d'arrêt définissant la première extrémité de la course et adaptée pour détecter un contact avec une partie du camion, l'unité de commande étant adaptée pour commander un déplacement d'au moins l'un des premier et deuxième portiques uniquement lorsque la butée d'arrêt détecte un contact avec une partie du camion.

La station de lavage peut comprendre en outre un organe de guidage s'étendant selon la direction longitudinale X et sur lequel la structure de lavage est montée.

Les premier et deuxième organes de lavage peuvent être choisis parmi un rouleau de lavage s'étendant selon un axe et monté pivotant selon ledit axe, et une rampe de pulvérisation pourvue d'au moins une buse de pulvérisation.

En particulier, le premier portique peut comprendre au moins deux rampes de pulvérisation latérales s'étendant selon une direction verticale perpendiculaire à la direction longitudinale et agencées de manière à placer lesdites au moins une buse de pulvérisation respectivement en regard de surfaces latérales extérieures opposées du camion, et au moins une rampe de pulvérisation transversale s'étendant selon une direction transversale perpendiculaire aux directions longitudinale et verticale et agencée de manière à placer les buses de pulvérisation en regard d'une surface supérieure du camion, ladite rampe de pulvérisation transversale étant montée pivotante autour d'un axe transversal et déplaçable selon la direction verticale de manière à placer ladite au moins une buse de pulvérisation en regard d'une surface avant du camion, et
le deuxième portique peut comprendre au moins deux rouleaux de lavage latéraux s'étendant selon la direction verticale et agencés de manière à venir en contact respectivement avec les surfaces latérales extérieures du camion.

De façon complémentaire ou indépendante des dispositions précitées concernant la structure de lavage, le chariot de lavage peut présenter un axe longitudinal central et comprendre en outre :
- des organes de déplacement supportant le châssis et adaptés pour déplacer le chariot de lavage selon la direction longitudinale, et
- un système de centrage adapté pour centrer l'axe longitudinal central du chariot de lavage par rapport à deux surfaces latérales intérieures en regard de la remorque.

Les organes de déplacement peuvent présenter chacun une surface de contact destinée à reposer sur un plancher de la remorque, lesdites surfaces de contact définissant un plan de contact, et le système de centrage peut comporter :
- une traverse s'étendant selon un axe transversal perpendiculaire à l'axe longitudinal central, entre deux extrémités opposées disposées de part et d'autre du châssis, ladite traverse étant montée coulissante sur le châssis selon l'axe transversal,
- deux organes de guidage montés respectivement sur les extrémités de la traverse et destinés à venir en contact respectivement avec les surfaces latérales intérieures de la remorque,
- un support monté sur le châssis déplaçable selon un axe vertical perpendiculaire aux axes longitudinal central et transversal, le support comportant une roue de centrage,
- un mécanisme de transmission connectant le support à la traverse, ledit mécanisme de transmission étant adapté pour :
   lorsque la traverse est centrée par rapport à l'axe longitudinal central, mettre le support dans une position inactive dans laquelle ledit support est surélevé de telle manière que la roue de centrage est à distance du plan de contact, et
   lorsque la traverse est excentrée par rapport à l'axe longitudinal central, mettre le support dans une position active dans laquelle ledit support est abaissé de telle manière que la roue de centrage présente une surface de contact dans le plan de contact.

Le support peut comprendre un flasque s'étendant sensiblement selon l'axe longitudinal central entre des premier et deuxième bords opposés, et un bras s'étendant sensiblement perpendiculairement depuis le deuxième bord du flasque jusqu'à une extrémité libre, le premier bord du flasque étant monté pivotant selon un axe parallèle à l'axe transversal sur le châssis,
et le mécanisme de transmission peut comprendre une bielle s'étendant entre des première et deuxième extrémités opposées montées pivotantes selon des axes parallèles à l'axe longitudinal central respectivement sur une portion centrale de la traverse et l'extrémité libre du bras du support, la bielle s'étendant sensiblement parallèlement à l'axe vertical lorsque la traverse est centrée par rapport à l'axe longitudinal central, et étant inclinée par rapport à l'axe vertical lorsque la traverse est excentrée par rapport à l'axe longitudinal central.

Dans un autre mode de réalisation, le système de centrage peut comporter :
- au moins une traverse s'étendant selon un axe transversal perpendiculaire à l'axe longitudinal central, entre deux extrémités opposées disposées de part et d'autre du châssis, ladite traverse étant montée coulissante sur le châssis selon l'axe transversal,
- deux organes de guidage montés respectivement sur les extrémités de la traverse et destinés à venir en contact respectivement avec les surfaces latérales intérieures de la remorque,
- un dispositif capteur de position adapté pour générer un signal de position représentatif de la position de la traverse par rapport à l'axe longitudinal central,
- un système d'entraînement relié au capteur et adapté pour déplacer le chariot par rapport à la traverse de manière à centrer le chariot sur la traverse en fonction du signal de position généré par le dispositif capteur de position.

En particulier, les organes de déplacement peuvent comprendre au moins deux roues écartées l'une de l'autre selon l'axe transversal, le système d'entraînement comprenant au moins deux moteurs adaptés pour entraîner respectivement les roues à des vitesses adaptées pour centrer le chariot sur la traverse.

La traverse peut comprendre un dispositif de réglage adapté pour régler un écartement selon l'axe transversal entre les organes de guidage.

En particulier, le dispositif de réglage peut comprendre :
- deux arbres de liaison montés coulissants sur le châssis, lesdits arbres de liaison présentant respectivement des premières extrémités adjacentes et des deuxièmes extrémités opposées aux premières extrémités et portant les organes de guidage,
- au moins un organe de réglage interposé entre les premières extrémités des arbres de liaison, ledit organe de réglage étant élastiquement déformable, et
- un dispositif de blocage adapté pour, dans un état actif, empêcher une déformation de l'organe de réglage et, dans un état inactif, autoriser une déformation de l'organe de réglage.

Selon un autre aspect, l'invention concerne un procédé de lavage de camion mettant en oeuvre une station de lavage telle que définie précédemment, ledit camion comprenant un tracteur et une remorque, ladite remorque présentant une extrémité avant solidarisée au tracteur et une extrémité arrière opposée à l'extrémité avant, ledit procédé de lavage comprenant les étapes consistant à :
- déplacer conjointement selon la direction longitudinale les premier et deuxième portiques dans leur position rapprochée, sur la remorque depuis l'extrémité arrière jusqu'à l'extrémité avant,
- lorsque les premier et deuxième portiques atteignent l'extrémité avant de la remorque, faire passer les premier et deuxième portiques de leur position rapprochée à leur position écartée, et commander le déplacement selon la direction longitudinale du premier portique sur le tracteur, le deuxième portique restant sur la remorque,
- déplacer selon la direction longitudinale le chariot de lavage, à l'intérieur de la remorque depuis l'extrémité arrière jusqu'à l'extrémité avant, éventuellement simultanément au déplacement conjoint des premier et deuxième portiques.

D'autres objets et avantages de l'invention apparaîtront à la lecture de la description qui suit d'un mode de réalisation particulier donné à titre d'exemple non limitatif, la description étant faite en référence aux dessins annexés dans lesquels :
- la figure 1 est une représentation en perspective d'une station de lavage selon un mode de réalisation de l'invention, la station de lavage comprenant une structure de lavage de l'extérieur d'un camion,
- la figure 2 est une représentation en perspective de la structure de lavage de la station de lavage de la figure 1, illustrant des premier et deuxième portiques de la structure de lavage dans une position écartée,
- la figure 3 est une représentation en vue de face de la structure de lavage de la station de lavage de la figure 1,
- la figure 4 est une représentation en perspective d'un chariot de lavage de l'intérieur d'une remorque du camion pouvant être mis en oeuvre dans la station de lavage de la figure 1,
- les figures 5 et 6 sont des représentations partielles respectivement en vue de face et en vue latérale d'un système de centrage du chariot de lavage de la figure 4,
- les figures 7 et 8 sont des représentations partielles respectivement en vue de face et en vue latérale d'un autre mode de réalisation du système de centrage du chariot de lavage de la figure 4,
- les figures 9 à 13 sont des représentations d'étapes d'un procédé de lavage d'un camion mettant en oeuvre la station de lavage de la figure 1.

Sur les figures, les mêmes références désignent des éléments identiques ou analogues.

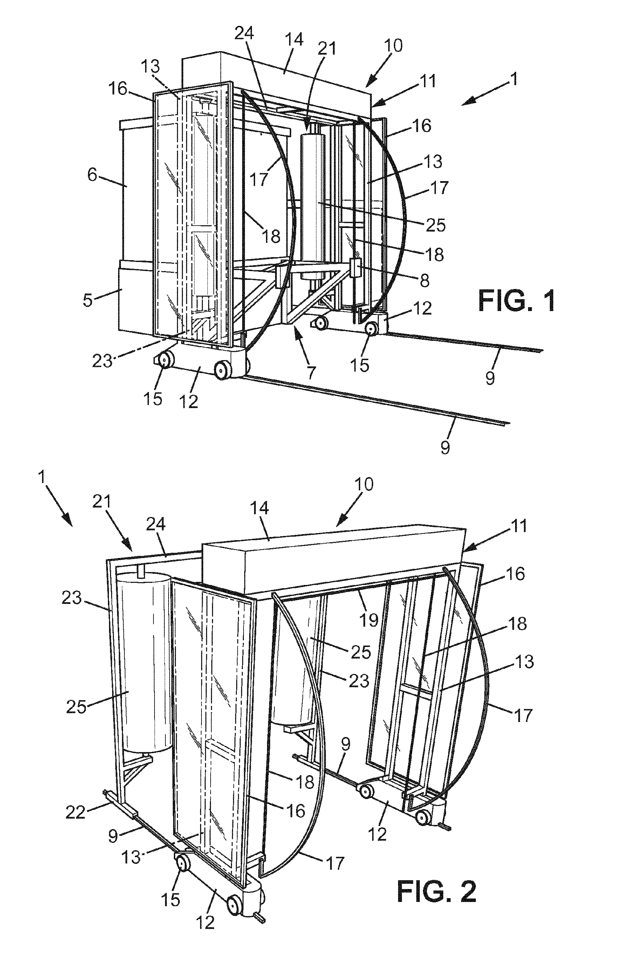

Les figures 1 à 3 représentent un mode de réalisation d'une station de lavage 1 adaptée pour le lavage d'un camion 2 comprenant une remorque 3 accrochée à un tracteur 4.

Dans le mode de réalisation représenté, la station de lavage 1 est installée à proximité d'un quai 5 sur lequel est prévu un local technique 6 comprenant notamment une source d'alimentation en énergie électrique et une source d'alimentation en eau. En variante, pour une application dans le cadre d'une offre de service, le local technique 6 pourrait être monté une remorque d'un camion.

Un butoir 7 comprenant une ou plusieurs butées d'arrêt 8, deux sur la figure 1, est disposé au pied du quai 5. Les butées d'arrêt 8 sont agencées pour pouvoir venir en contact avec une partie du camion 2, et notamment une extrémité arrière de la remorque 3. Comme il apparaîtra de la suite de la description, les butées d'arrêt 8 sont également adaptées pour détecter un contact avec l'extrémité arrière de la remorque 3. Un organe de guidage est réalisé sous la forme de deux rails 9 parallèles s'étendant depuis le butoir 7 selon la direction longitudinale X, les rails 9 étant écartés l'un de l'autre selon une direction transversale Y perpendiculaire à la direction longitudinale X.

Une structure de lavage 10 est montée sur les rails 9 de manière à pourvoir être déplacée selon la direction longitudinale X le long d'une course entre une première extrémité au niveau du butoir 7 et une deuxième extrémité au niveau des extrémités des rails 9 opposées au butoir 7.

La structure de lavage 10 comprend un cadre délimitant un espace ouvert selon une direction longitudinale X. Le cadre présente des dimensions suffisantes pour pouvoir être déplacé autour du camion 2 s'étendant selon la direction longitudinale X et reçu dans l'espace.

La structure de lavage 10 comporte un premier portique 11 comprenant deux chariots 12 montés sur les rails 9, deux montants 13 s'étendant respectivement depuis les chariots 12 selon une direction verticale Z perpendiculaire aux directions longitudinale X et transversale Y, et une traverse 14 s'étendant selon la direction transversale Y entre des extrémités des montants 13 opposées aux chariots 12. Les chariots 12 sont pourvus de roues 15 de manière à pouvoir être déplacés sur les rails 9. Les montants 13 sont quant à eux pourvus de parois de protection 16 contre des projections émises lors du lavage. Sur une face avant, le premier portique 11 comprend également des arceaux 17 s'étendent au voisinage des montants 13 selon la direction verticale Z en présentant une courbure, à rayon constant, dans la direction longitudinale X.

Le premier portique 11 est équipé d'un ou plusieurs premiers organes de lavage adaptés pour laver une surface extérieure du camion 2. Les premiers organes de lavage peuvent notamment être choisis parmi un rouleau de lavage s'étendant selon un axe et monté pivotant selon l'axe, et une rampe de pulvérisation pourvue d'une ou plusieurs buses de pulvérisation.

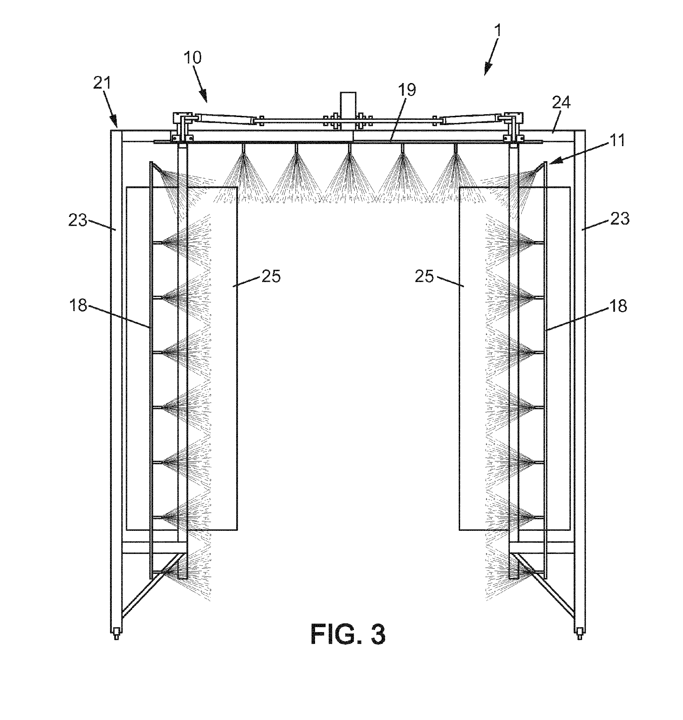

Dans le mode de réalisation représenté sur la figure 3, le premier portique 11 comprend deux rampes de pulvérisation latérales 18 montées respectivement sur les montants 13. Les rampes de pulvérisation latérales 18 sont agencées selon la direction verticale Z avec les buses de pulvérisation orientées vers l'espace de manière à pouvoir être placées en regard de surfaces latérales extérieures opposées du camion 2. Le premier portique 11 comprend également une rampe de pulvérisation transversale 19 portée par les arceaux 17. La rampe de pulvérisation transversale 19 est montée sur les arceaux 17 selon la direction transversale Y avec les buses de pulvérisation orientées vers l'espace de manière à pouvoir être placées en regard d'une surface supérieure du camion 2 lorsque la rampe de pulvérisation transversale 19 est située au niveau de la traverse 14 du premier portique 11. La rampe de pulvérisation transversale 19 est, par ailleurs, montée pivotante autour d'un axe transversal et coulissante sur les arceaux 17. Elle est alors déplaçable en translation circulaire le long des arceaux 17 de manière à pouvoir placer les buses de pulvérisation en regard d'une surface avant du camion 2. De préférence, les rampes de pulvérisation 18, 19 du premier portique 11 sont adaptées réaliser une pulvérisation haute pression.

La structure de lavage 10 comporte également un deuxième portique 21 comprenant deux chariots 22 montés sur les rails 9, deux montants 23 s'étendant respectivement depuis les chariots 22 selon la direction verticale Z, et une traverse 24 s'étendant selon la direction transversale Y entre des extrémités des montants 23 opposées aux chariots 22. Les chariots 22 se présentent sous la forme de patins adaptés pour pouvoir coulisser sur les rails 9.

Le deuxième portique 21 est équipé d'un ou plusieurs deuxièmes organes de lavage adaptés pour laver une surface extérieure du camion 2. Les deuxièmes organes de lavage peuvent notamment être choisis parmi un rouleau de lavage s'étendant selon un axe et monté pivotant selon l'axe, et une rampe de pulvérisation pourvue d'une ou plusieurs buses de pulvérisation.

Dans le mode de réalisation représenté sur les figures 1 à 3, le deuxième portique comprend deux rouleaux de lavage latéraux 25 montés respectivement sur les montants 23. Les rouleaux de lavage latéraux 25 sont agencés selon la direction verticale Z de manière à pouvoir venir en contact respectivement avec les surfaces latérales extérieures du camion 2.

Sur les figures 1 et 2, le premier portique 11 est situé devant le deuxième portique 21 dans un sens allant de la première extrémité à la deuxième extrémité de la course, le deuxième portique 21 étant placé entre le premier portique 11 et la première extrémité de la course.

Selon l'invention, les premier 11 et deuxième 21 portiques sont déplaçables l'un par rapport à l'autre selon la direction longitudinale X entre une position rapprochée, représentée sur la figure 1, dans laquelle les premier 11 et deuxième 21 portiques sont à proximité l'un de l'autre, et une position écartée, représentée sur la figure 2, dans laquelle les premier 11 et deuxième 21 portiques sont à distance l'un de l'autre.

Dans le mode de réalisation représenté, le premier portique 11 est meneur et le deuxième portique 21 est mené. La station de lavage 1 est alors équipée d'un unique dispositif d'entraînement relié au premier portique 11 pour le déplacer selon la direction longitudinale X. En particulier, le dispositif d'entraînement peut comprendre un moteur disposé dans l'un ou chacun des chariots 12 du premier portique 11 pour en entraîner les roues 15 en rotation. Les chariots 12, 22 des premier 11 et deuxième 21 portiques sont alors conformés pour que, dans la position rapprochée des premier 11 et deuxième 21 portiques, les chariots 22 du deuxième portique 21 soient montés respectivement sur les chariots 12 du premier portique 11. Un dispositif de solidarisation mécanique, électromagnétique ou autre est alors prévu sur l'un ou l'autre des premier 11 et deuxième 12 portiques pour, dans un état actif, solidariser les chariots 12, 22 des premier 11 et deuxième 21 portiques et pour, dans un état inactif, désolidariser les chariots 12, 22 des premier 11 et deuxième 21 portiques.

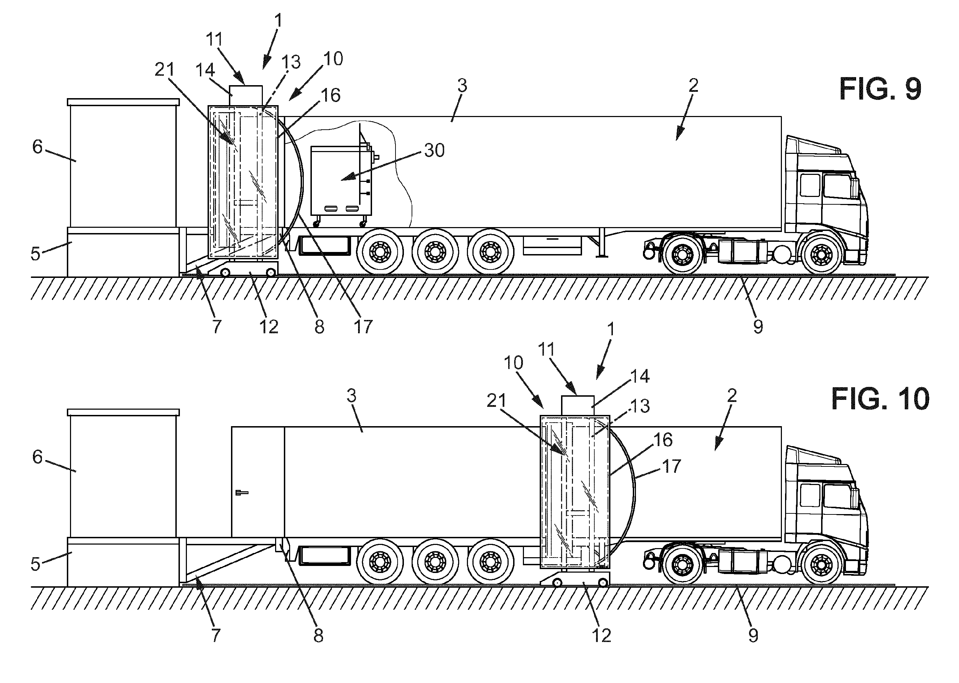

La station de lavage 1 comprend également une unité de commande électronique, connectée à la structure de lavage 10 et aux butée d'arrêt 8 du butoir 7 pour les piloter de manière appropriée et notamment conformément à un procédé de lavage décrit plus loin en relation avec les figures 9 à 13. En particulier, comme il apparaîtra de la suite de la description, l'unité de commande est adaptée pour sélectivement :
- commander un déplacement conjoint selon la direction longitudinale X des premier 11 et deuxième 21 portiques,
- commander des déplacements indépendants selon la direction longitudinale des premier et deuxième portiques.

En outre, pour assurer le pilotage approprié de la station de lavage 1, l'unité de commande peut comprendre une pluralité de capteurs délivrant des signaux au cours du procédé de lavage. Parmi ces capteurs, un capteur de position adapté pour détecter une extrémité avant de la remorque 3 solidarisée au tracteur 4 peut être prévu.

L'unité de commande, située par exemple à proximité du local technique 6, éventuellement à l'intérieur de celui-ci, peut comprendre une interface de communication permettant à un utilisateur de choisir parmi un ensemble de programmes de lavage préétablis ou de programmer la station de lavage 1. Les programmes de lavage en question peuvent être entièrement automatisés, l'ensemble des étapes de chacun des programmes de lavage s'exécutant de manière automatique, ou partiellement automatisé, au moins une partie des étapes de chacun des programmes de lavage s'exécutant pas à pas. L'interface de communication peut alors comprendre une télécommande permettant à l'utilisateur de commander le passage à l'étape suivante. L'interface de commande peut également comprendre un bouton d'arrêt d'urgence.

La structure de lavage 10 est reliée à un circuit d'alimentation en fluide de lavage. Le circuit d'alimentation en fluide de lavage est adapté pour alimenter les premier 11 et deuxième 21 portiques, et en particulier les premiers 18, 19 et deuxièmes 25 organes de lavage, de la structure de lavage 10 en fluide de lavage. Le fluide de lavage inclut tout fluide approprié pour réaliser un nettoyage, une désinfection, un rinçage, un décapage ou autre. Il s'agit généralement d'eau sous forme liquide ou vapeur ou un mélange liquide/vapeur, éventuellement mélangée à un produit additionnel approprié pour le nettoyage, la désinfection, le rinçage, le décapage ou autre. Le circuit d'alimentation est alors raccordé à la source d'alimentation en eau et comprend tous les composants permettant d'assurer l'alimentation de la structure de lavage 10, à savoir par exemple une ou plusieurs conduites, une ou plusieurs pompes, un ou plusieurs réservoirs, etc. Les composants sont notamment choisis pour permettre une pulvérisation à haute pression par les rampes de pulvérisation 18, 19 du premier portique 11. L'essentiel du circuit d'alimentation peut soit être disposé dans le local technique 6, soit être porté par la structure de lavage 10.

La station de lavage 1 comprend également un chariot de lavage 30 adapté pour être introduit à l'intérieur de la remorque 3 du camion 2 afin de laver l'intérieur de la remorque 3. La structure de lavage 10 précitée est ainsi adaptée pour pouvoir être utilisée en combinaison, et éventuellement de manière synchronisée, avec le chariot de lavage 30 de manière à réaliser un nettoyage complet du camion 2. Pour ce faire, le chariot de lavage 30 peut être connecté à l'unité de commande qui en contrôle le déplacement en fonction d'informations sur la position du chariot de lavage 30 par rapport à la remorque 3 et, le cas échant, d'informations sur la position de la structure de lavage 10 par rapport au camion 2.

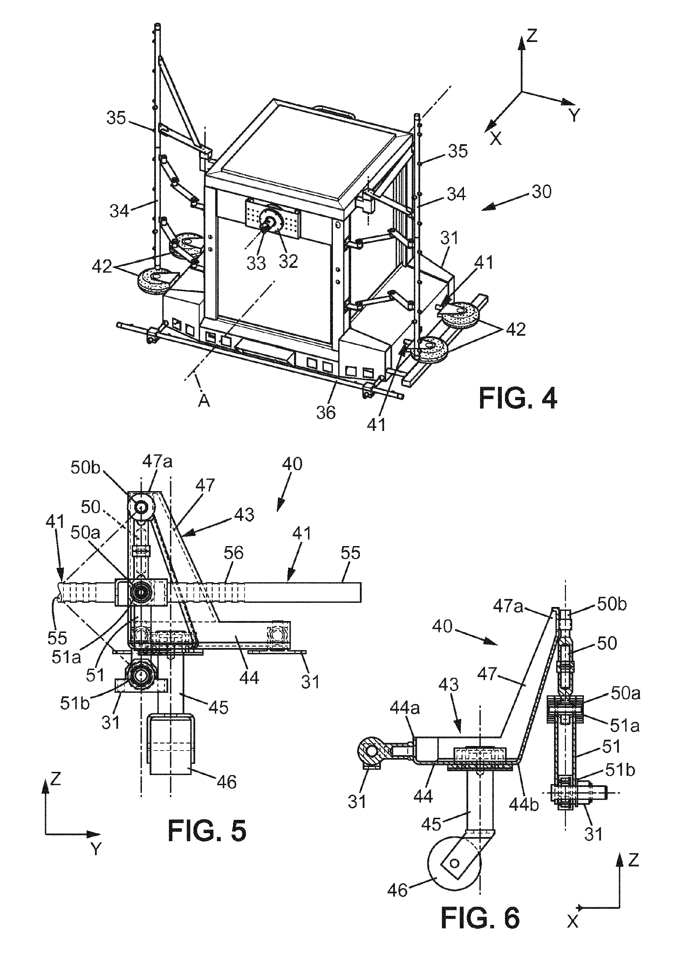

Le chariot de lavage 30 peut présenter tout type de structure et tout type de fonctionnement appropriés pour réaliser un lavage de la surface intérieure de la remorque 3. Dans le mode de réalisation représenté sur la figure 4, le chariot de lavage 30 présente néanmoins une structure et un fonctionnement analogues à ceux décrits dans la demande de brevet FR 2 959 946.

En substance, le chariot de lavage 30 de forme parallélépipédique s'étend selon un axe longitudinal central A entre des faces avant et arrière. Il comprend un châssis 31 et un dispositif de lavage monté sur le châssis 31 et adapté pour laver la surface intérieure de la remorque 3. La description du chariot de lavage 30 est faite en relation avec un chariot de lavage dont l'axe longitudinal central A s'étend selon la direction longitudinale X décrite précédemment. Dans ces conditions, dans la suite de la description du chariot de lavage 30, le terme « longitudinal » se rapporte à une orientation parallèle à l'axe longitudinal central A, le terme « transversal » se rapporte à une orientation transversale perpendiculaire à l'orientation longitudinale correspondant à la direction transversale dans le mode de réalisation représenté, et le terme « vertical » se rapporte à une orientation perpendiculaire aux orientations longitudinal et transversale correspondant à la direction verticale dans le mode de réalisation représenté. Le chariot peut néanmoins présenter toute autre orientation.

Le châssis 31 comporte des organes de déplacement comprenant au moins deux roues écartées l'une de l'autre selon la direction transversale Y, pivotantes selon des axes transversaux, supportant le châssis 31 et adaptés pour déplacer le chariot de lavage 30 selon la direction longitudinale X. En particulier, les organes de déplacement peuvent comprendre quatre roues réparties en deux paires de roues agencées respectivement de part et d'autre de l'axe longitudinal central A. Les roues, connectées à tout système d'entraînement approprié contrôlé par l'unité de commande, présentent chacun une surface de contact destinée à reposer sur un plancher de la remorque 3 et définissant un plan de contact. En particulier, le système d'entraînement peut comprendre au moins deux moteurs adaptés pour entraîner respectivement au moins l'une des roues de chaque paire de roues.

Le dispositif de lavage comporte une tête de lavage 32 montée pivotante selon un axe longitudinal selon lequel elle s'étend. Elle est pourvue de buses de pulvérisation 33 adaptées pour projeter des jets de fluide de lavage sous pression vers l'avant, mais aussi verticalement et transversalement, et sous forme de brouillard à l'intérieur de la remorque 3.

Le dispositif de lavage comporte également deux rampes de pulvérisation verticales 34 écartées l'une de l'autre transversalement et montées pivotantes selon des axes verticaux sur des faces latérales du chariot de lavage 30 s'étendant entre les faces avant et arrière. Chacune des rampes de pulvérisation verticales 34 comporte une ou plusieurs buses de pulvérisation 35 agencées pour diffuser le fluide de lavage selon une direction radiale par rapport à l'axe de la rampe de pulvérisation verticale 34. Chaque rampe de pulvérisation verticale 34 peut notamment comporter deux séries de buses de pulvérisation 35 alignées, l'une des séries étant agencée dans une moitié supérieure de la rampe de pulvérisation verticale 34, et l'autre série dans une moitié inférieure de la rampe de pulvérisation verticale 34. Les buses de pulvérisation 35 de la moitié supérieure peuvent alors être alimentées en fluide de lavage indépendamment des buses de pulvérisation 35 de la moitié inférieure, et réciproquement.

Le dispositif de lavage comporte en outre, sur la face avant du chariot de lavage 30, une rampe de pulvérisation inférieure 36 qui s'étend transversalement et qui comporte une ou plusieurs buses de pulvérisation agencées pour diffuser le fluide de lavage selon une direction radiale par rapport à l'axe de la rampe de pulvérisation inférieure 36, notamment en direction du plancher de la remorque 3.

Le chariot de lavage 30 est relié par tout moyen approprié au circuit d'alimentation en fluide de lavage de la station de lavage.

Sur les figures 5 et 6, le chariot de lavage 30 comprend en outre un système de centrage 40 adapté pour centrer l'axe longitudinal central A du chariot de lavage 30 par rapport à deux surfaces latérales intérieures en regard de la remorque 3.

Le système de centrage 40 comporte deux traverses 41 s'étendant respectivement selon des axes transversaux à distance l'une de l'autre selon la direction longitudinale X. Chacune des traverses 40 présente deux extrémités opposées disposées de part et d'autre du châssis 31 portant respectivement deux organes de guidage, sous la forme de roues de guidage 42 pivotantes selon des axes verticaux. Chaque traverse 41 est montée coulissante sur le châssis 31 selon son axe transversal.

Le système de centrage 40 comporte également un support 43 associé à chaque traverse 41. Le support 43 comprend un flasque 44 s'étendant sensiblement horizontalement entre des premier 44a et deuxième 44b bords opposés écartés l'un de l'autre selon l'axe longitudinal central A. Le premier bord 44a du flasque 44 est monté pivotant selon un axe transversal sur le châssis 31. Une chape 45 est montée pivotante selon un axe de pivotement vertical sur le flasque 44. La chape 45 supporte une roue de centrage 46 montée pivotante selon un axe perpendiculaire à l'axe de pivotement de la chape 45. Le support 43 comprend également un bras 47 s'étendant sensiblement perpendiculairement au flasque 44, depuis le deuxième bord 44b du flasque 44, jusqu'à une extrémité libre 47a.

Pour connecter le support 43 à la traverse 41 associée, le système de centrage 30 comprend un mécanisme de transmission.

Le mécanisme de transmission comprend une bielle 50 s'étendant entre des première 50a et deuxième 50b extrémités opposées montées pivotantes selon des axes longitudinaux respectivement sur une portion centrale de la traverse 41 et l'extrémité libre 47a du bras 47 du support 43. Une autre bielle 51 s'étend entre une première extrémité 51a montée pivotante selon un axe longitudinal sur la portion centrale de la traverse 41, à l'opposé de la première extrémité 50a de la bielle 50 précédente, et une deuxième extrémité 51b montée pivotante selon un axe longitudinal sur le châssis 31.

Pour chaque traverse 41, les roues de guidage 42 sont en contact respectivement avec les surfaces latérales intérieures de la remorque 3.

Lorsque l'axe longitudinal central A du chariot de lavage 30 s'étend selon l'axe central de la remorque 3, chacune des traverses 41 est centrée par rapport à l'axe longitudinal central A et les bielles 50, 51 s'étendent sensiblement verticalement. Le support 43 est alors dans une position inactive dans laquelle il est surélevé de telle manière que la roue de centrage 46 est à distance du plan de contact défini par les roues du chariot de lavage 30.

Lorsque l'axe longitudinal central A du chariot de lavage 30 s'écarte de l'axe central de la remorque 3, chacune des traverses coulisse sous l'effet des contacts des roues de guidage 42 avec les surfaces intérieures de la remorque 3 et se trouve excentrée par rapport à l'axe longitudinal central A. Les bielles 50, 51 sont alors inclinées ce qui a pour effet de faire descendre l'extrémité libre 47a du bras 47 du support 43, et par conséquent l'ensemble du support 43, verticalement. Le support 43 est alors dans une position active dans laquelle il est abaissé de telle manière que la roue de centrage 46 présente une surface de contact dans le plan de contact défini par les roues du chariot de lavage 30. Les roues de centrage 46 associées aux deux traverses 41 remettent alors le chariot de lavage 30 selon l'axe central de la remorque 3.

Une fois l'axe longitudinal central A du chariot de lavage 30 revenu selon l'axe central de la remorque 3, le support 43 repasse dans la position inactive comme expliqué précédemment.

Afin de pouvoir adapter le chariot de lavage 30 à différents types de remorque 3, la traverse du système de centrage comprend un dispositif de réglage adapté pour régler un écartement transversal entre les roues de guidage 42.

Dans le mode de réalisation représenté, le dispositif de réglage comprend deux arbres de liaison 55 montés coulissants sur le châssis 31. Les arbres de liaison 55 présentent respectivement des premières extrémités adjacentes et des deuxièmes extrémités opposées aux premières extrémités et portant les roues de guidage 42. Un organe de réglage est interposé entre les premières extrémités des arbres de liaison 55. L'organe de réglage est élastiquement déformable pour réaliser un réglage automatique de l'écartement. L'organe de réglage est, par exemple, constitué par un ressort de compression 56 disposé coaxialement à la première extrémité de chaque arbre de liaison 55. Un dispositif de blocage, par exemple électromagnétique, est alors prévu pour, dans un état actif, empêcher une déformation des ressorts de compression 56 et, dans un état inactif, autoriser une déformation des ressorts de compression 56.

Le dispositif de réglage permet également de simplifier l'entrée du chariot de lavage 30 dans la remorque 3 lorsque des portes en réduisent la dimension transversale.

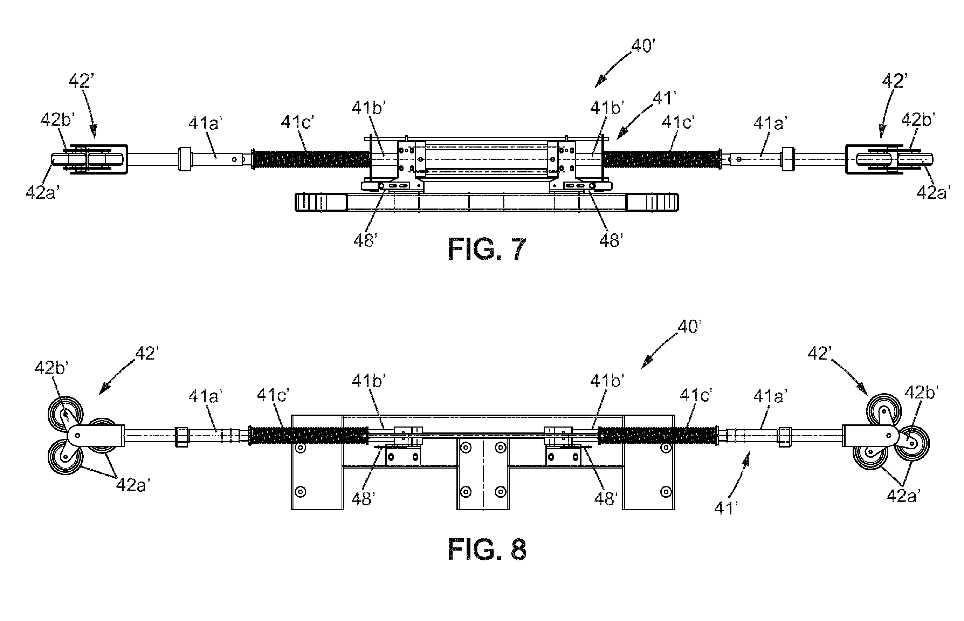

Les figures 7 et 8 représentent un autre mode de réalisation du système de centrage 40' permettant de centrer l'axe longitudinal central A du chariot de lavage 30 à l'intérieur de la remorque. Chaque traverse 41' est montée coulissante sur le châssis 31 selon son axe transversal. Chacune des traverses 41' présente deux extrémités opposées disposées de part et d'autre du châssis 31 portant respectivement deux organes de guidage 42'. Dans ce mode de réalisation, chaque organe de guidage se présente sous la forme d'un ensemble de trois roues de guidage 42a' pivotantes selon des axes verticaux. Les trois roues de guidage 42a' de chaque ensemble sont portées par un étrier 42b' monté pivotant selon un axe vertical sur l'extrémité de la traverse. Ces dispositions permettent d'assurer le franchissement de tout obstacle s'étendant transversalement dans la course des traverses 41'.

Chaque traverse 41' est constituée de deux arbres extérieurs 41a' montés coulissants respectivement sur des arbres intérieurs 41b' agencés de part et d'autre d'une portion centrale 41c'. Des organes de réglage, élastiquement déformables, se présentant par exemple sous la forme de ressorts 41d', s'étendent entre chacun des arbres extérieurs 41a' et la portion centrale 41c' de manière à écarter l'arbre extérieur 41a' de la portion centrale 41c'.

Pour chaque traverse 41', un dispositif capteur de position est adapté pour générer un signal de position représentatif de la position de la traverse 41' par rapport à l'axe longitudinal central A. Par exemple, dans le mode de réalisation représenté, le dispositif capteur de position comprend deux capteurs de position écartés l'un de l'autre selon la direction transversale Y d'une distance correspondant sensiblement à la longueur de la portion centrale.

De cette manière, lorsque le chariot de lavage 30 est centré sur la traverse 41', les capteurs sont sensiblement en regard des extrémités de la portion centrale 41c' et peuvent détecter des cibles disposées à ces extrémités. Lorsque le chariot de lavage 30 est décentré, les capteurs détectent le décalage et envoient des signaux correspondants à l'unité de commande qui peut alors commander les moteurs du système d'entraînement pour qu'ils adaptent les vitesses des roues du chariot de lavage de manière à centrer le chariot de lavage sur la traverse 41'. En variante, tout autre système d'entraînement relié au capteur et adapté pour déplacer le chariot par rapport à la traverse 41' de manière à centrer le chariot sur la traverse 41' en fonction du signal de position généré par le dispositif capteur de position pourrait être prévu.

En relation avec les figures 9 à 13, un procédé de lavage mettant en oeuvre la station de lavage 1 est décrit.

La station de lavage 1 est d'abord mise en position de sécurité, correspondant à la situation représentée sur la figure 1, dans laquelle la structure de lavage 10 avec les premier 11 et deuxième 21 portiques en position rapprochée est située près du quai 5.

Sur la figure 9, lorsqu'un camion 2 se présente en marche arrière, il se met en place contre les butées d'arrêt 8. A cet égard, l'unité de commande peut être programmée pour ne commander un déplacement d'au moins l'un des premier 11 et deuxième 21 portiques que lorsque les butées d'arrêt 8 détectent un contact avec une partie du camion 2.

Sur la figure 10, une fois le contact détecté, un cycle de lavage présélectionné peut commencer avec un déplacement conjoint selon la direction longitudinale X des premier 11 et deuxième 21 portiques dans leur position rapprochée, sur la remorque 3 depuis une extrémité arrière de la remorque 3, jusqu'à l'extrémité avant. Ce faisant, le chariot de lavage 30 peut être déplacé à l'intérieur de la remorque 3. La station de lavage 1 peut ainsi réaliser une pulvérisation générale, intérieur et extérieur, de la remorque 3.

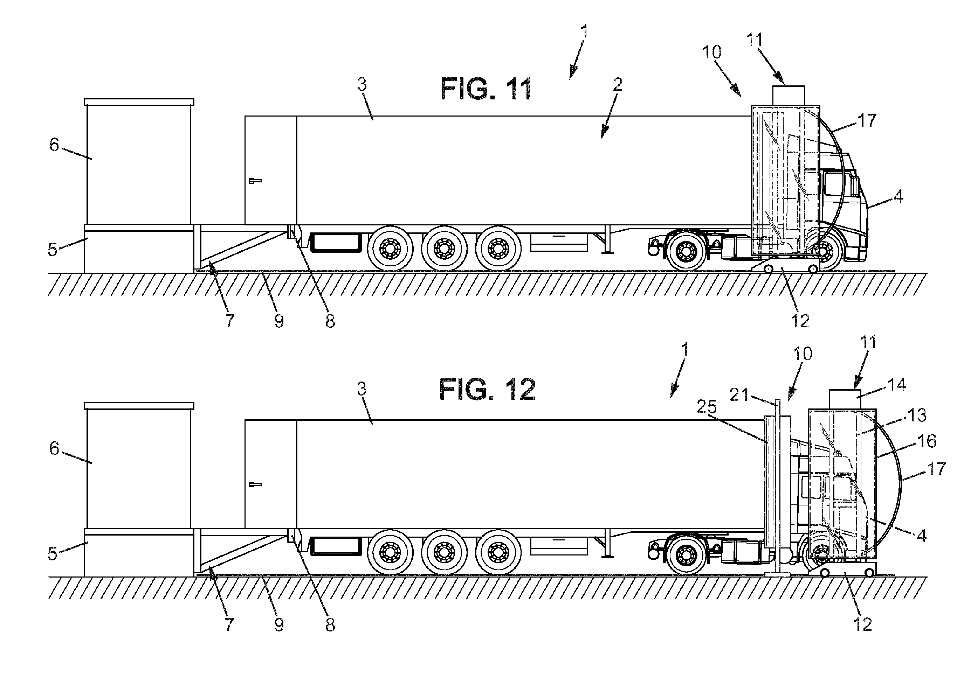

Sur les figures 11 et 12, le capteur de position détecte l'extrémité avant de la remorque 3. Après une éventuelle temporisation pour laisser agir le fluide de lavage pulvérisé, l'unité de commande fait passer les premier 11 et deuxième 21 portiques de leur position rapprochée à leur position écartée en faisant passer le dispositif de solidarisation de l'état actif à l'état inactif. Le premier portique 11 se déplace alors seul selon la direction longitudinale X sur le tracteur 4, le deuxième portique 21 restant sur la remorque 3, immobilisé au niveau de l'extrémité avant de la remorque 3. Le premier portique 11 peut réaliser une pulvérisation de la cabine du tracteur 4 sur les surfaces latérales et la surface avant.

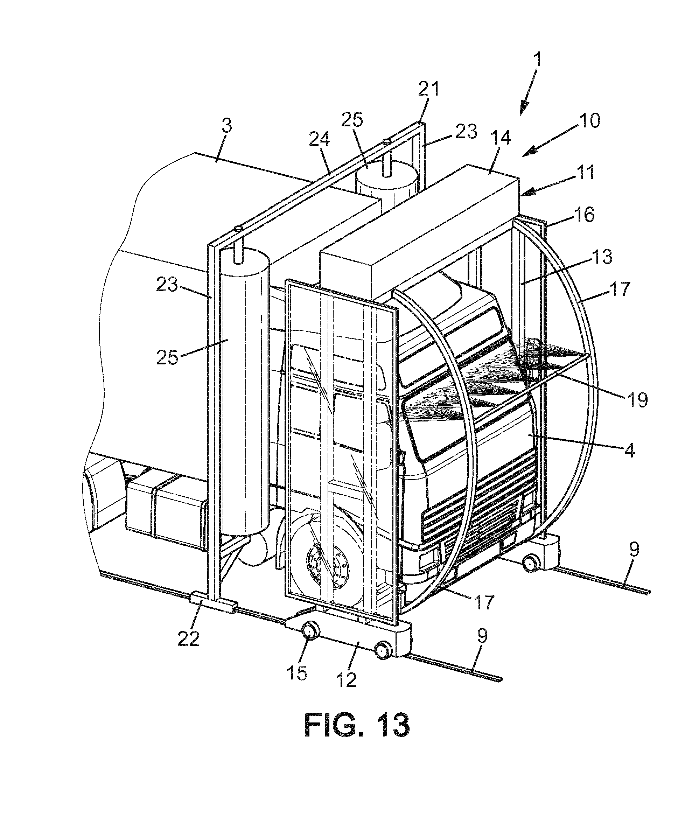

Sur la figure 13, éventuellement après une temporisation pour laisser agir le fluide de lavage pulvérisé ayant par exemple un pouvoir démoustiquant et d'élimination du film routier, la rampe de pulvérisation transversale 19 réalise une pulvérisation haute pression de la surface avant de la cabine de bas en haut. Les surfaces latérales et la surface supérieure du tracteur 4 sont également lavées à haute pression.

Le premier portique 11 est ensuite rapproché du deuxième portique 21, le dispositif de solidarisation étant passé dans l'état actif lorsque les chariots 22 du deuxième portique 21 sont montés sur les chariots 12 du premier portique 11. La structure de lavage 10 se déplace vers l'extrémité arrière de la remorque 3 avec une mise en marche des rouleaux de lavage 25 du deuxième portique 21. A l'intérieur de la remorque 3, le chariot de lavage 30 lave les surfaces intérieures basses.

La structure de lavage 10 et le chariot de lavage 30 peuvent à nouveau être déplacés vers l'extrémité avant de la remorque 3 avec un lavage des surfaces intérieures hautes de la remorque 3 par le chariot de lavage 30.

La structure de lavage 10 et le chariot de lavage 30 sont ensuite déplacés vers l'extrémité arrière de la remorque 3 pour une désincrustation du plancher et une élimination des déchets à l'intérieur de la remorque 3 par le chariot de lavage 30, et un rinçage haute pression par le premier portique 11 de la structure de lavage 10.

## Revendications

1. Station de lavage (1) de camion (2) comprenant un tracteur (4) et une remorque (3), ladite station de lavage (1) comprenant un circuit d'alimentation en fluide de lavage et une structure de lavage (10) de l'extérieur du camion (2) reliée audit circuit d'alimentation en fluide de lavage, ladite structure de lavage (10) délimitant un espace ouvert selon une direction longitudinale (X) et adapté pour recevoir le camion (2) placé selon la direction longitudinale (X), ladite structure de lavage (10) étant déplaçable selon la direction longitudinale (X),
la structure de lavage (10) comportant au moins un premier portique (11) équipé d'au moins un premier organe de lavage (18, 19) adapté pour laver une surface extérieure du camion (2), et un deuxième portique (21) équipé d'au moins un deuxième organe de lavage (25) adapté pour laver la surface extérieure du camion (2), les premier (11) et deuxième (21) portiques étant déplaçables l'un par rapport à l'autre selon la direction longitudinale (X) entre une position rapprochée dans laquelle lesdits premier (11) et deuxième (21) portiques sont à proximité l'un de l'autre et une position écartée dans laquelle lesdits premier (11) et deuxième (21) portiques sont à distance l'un de l'autre,
ladite station de lavage (1) étant **caractérisée en ce qu'**elle comprend en outre un chariot de lavage (30) de l'intérieur de la remorque (3) du camion (2) relié au circuit d'alimentation en fluide de lavage, ledit chariot de lavage (30) comprenant un châssis (31) déplaçable selon la direction longitudinale (X), et un dispositif de lavage (32, 34, 36) monté sur le châssis (31) et adapté pour laver une surface intérieure de la remorque (3).

2. Station de lavage (1) selon la revendication 1, dans laquelle les premier (11) et deuxième (21) portiques comprennent chacun au moins un chariot (12, 22) mobile selon la direction longitudinale (X), et au moins un montant (13, 23) monté sur le chariot (12, 22), les montants (13, 23) des premier (11) et deuxième (21) portiques portant respectivement les premier (18, 19) et deuxième (25) organes de lavage.

3. Station de lavage (1) selon l'une quelconque des revendications 1 à 2, comprenant :
- un unique dispositif d'entraînement relié au premier portique (11), meneur, pour déplacer ledit premier portique (11) selon la direction longitudinale (X),
- un dispositif de solidarisation adapté pour, dans un état actif, solidariser le premier portique (11) au deuxième portique (21), mené, et pour, dans un état inactif, désolidariser les premier (11) et deuxième (21) portiques.

4. Station de lavage (1) selon l'une quelconque des revendications 1 à 3, comprenant en outre une unité de commande connectée à la structure de lavage (10) et adaptée pour sélectivement :
- commander un déplacement conjoint selon la direction longitudinale (X) des premier (11) et deuxième (21) portiques,
- commander des déplacements indépendants selon la direction longitudinale (X) des premier (11) et deuxième (21) portiques.

5. Station de lavage (1) selon la revendication 4, dans laquelle l'unité de commande comprend un capteur de position adapté pour détecter une extrémité avant de la remorque (3) solidarisée au tracteur (4), l'unité de commande étant adaptée pour :
- commander le déplacement conjoint selon la direction longitudinale (X) des premier (11) et deuxième (21) portiques dans leur position rapprochée, sur la remorque (3) depuis une extrémité arrière de la remorque (3) opposée à l'extrémité avant, jusqu'à l'extrémité avant,
- lorsque le capteur de position détecte l'extrémité avant de la remorque (3), faire passer les premier (11) et deuxième (21) portiques de leur position rapprochée à leur position écartée, et commander le déplacement selon la direction longitudinale (X) du premier portique (11) sur le tracteur (4), le deuxième portique (21) restant sur la remorque (4).

6. Station de lavage (1) selon l'une quelconque des revendications 4 et 5, dans laquelle la structure de lavage (10) est déplaçable selon la direction longitudinale (X) selon une course entre des première et deuxième extrémités opposées, la station de lavage (1) comprenant une butée d'arrêt (8) définissant la première extrémité de la course et adaptée pour détecter un contact avec une partie du camion (2), l'unité de commande étant adaptée pour commander un déplacement d'au moins l'un des premier (11) et deuxième (21) portiques uniquement lorsque la butée d'arrêt (8) détecte un contact avec une partie du camion (2).

7. Station de lavage (1) selon l'une quelconque des revendications 1 à 6, comprenant en outre un organe de guidage (9) s'étendant selon la direction longitudinale (X) et sur lequel la structure de lavage (10) est montée.

8. Station de lavage (1) selon l'une quelconque des revendications 1 à 7, dans laquelle les premier (18, 19) et deuxième (25) organes de lavage sont choisis parmi un rouleau de lavage s'étendant selon un axe et monté pivotant selon ledit axe, et une rampe de pulvérisation pourvue d'au moins une buse de pulvérisation.

9. Station de lavage (1) selon la revendication 8, dans laquelle le premier portique (11) comprend au moins deux rampes de pulvérisation latérales (18) s'étendant selon une direction verticale (Z) perpendiculaire à la direction longitudinale (X) et agencées de manière à placer lesdites au moins une buse de pulvérisation respectivement en regard de surfaces latérales extérieures opposées du camion (2), et au moins une rampe de pulvérisation transversale (19) s'étendant selon une direction transversale (Y) perpendiculaire aux directions longitudinale (X) et verticale (Z) et agencée de manière à placer les buses de pulvérisation en regard d'une surface supérieure du camion (2), ladite rampe de pulvérisation transversale (19) étant montée pivotante autour d'un axe transversal et déplaçable selon la direction verticale (Z) de manière à placer ladite au moins une buse de pulvérisation en regard d'une surface avant du camion (2), et
dans laquelle le deuxième portique (21) comprend au moins deux rouleaux de lavage latéraux (25) s'étendant selon la direction verticale (Z) et agencés de manière à venir en contact respectivement avec les surfaces latérales extérieures du camion (2).

10. Station de lavage (1) selon l'une quelconque des revendications 1 à 9, dans laquelle le chariot de lavage (30) présente un axe longitudinal central (A) et comprend en outre :
- des organes de déplacement supportant le châssis (31) et adaptés pour déplacer le chariot de lavage (30) selon la direction longitudinale (X), et
- un système de centrage (40) adapté pour centrer l'axe longitudinal central (A) du chariot de lavage (30) par rapport à deux surfaces latérales intérieures en regard de la remorque (3).

11. Station de lavage (1) selon la revendication 10, dans laquelle les organes de déplacement présentent chacun une surface de contact destinée à reposer sur un plancher de la remorque (3), lesdites surfaces de contact définissant un plan de contact, et le système de centrage (40) comporte :
- une traverse (41) s'étendant selon un axe transversal perpendiculaire à l'axe longitudinal central (A), entre deux extrémités opposées disposées de part et d'autre du châssis (31), ladite traverse (41) étant montée coulissante sur le châssis (31) selon l'axe transversal,
- deux organes de guidage (42) montés respectivement sur les extrémités de la traverse (41) et destinés à venir en contact respectivement avec les surfaces latérales intérieures de la remorque (3),
- un support (43) monté sur le châssis (31) déplaçable selon un axe vertical perpendiculaire aux axes longitudinal central (A) et transversal, le support (43) comportant une roue de centrage (46),
- un mécanisme de transmission connectant le support (43) à la traverse (41), ledit mécanisme de transmission étant adapté pour :
lorsque la traverse (41) est centrée par rapport à l'axe longitudinal central (A), mettre le support (43) dans une position inactive dans laquelle ledit support (43) est surélevé de telle manière que la roue de centrage (46) est à distance du plan de contact, et
lorsque la traverse (41) est excentrée par rapport à l'axe longitudinal central (A), mettre le support (43) dans une position active dans laquelle ledit support (43) est abaissé de telle manière que la roue de centrage (46) présente une surface de contact dans le plan de contact.

12. Station de lavage (1) selon la revendication 11, dans laquelle le système de centrage (40) comporte :
- au moins une traverse (41') s'étendant selon un axe transversal perpendiculaire à l'axe longitudinal central (A), entre deux extrémités opposées disposées de part et d'autre du châssis (31), ladite traverse (41') étant montée coulissante sur le châssis (31) selon l'axe transversal,
- deux organes de guidage (42') montés respectivement sur les extrémités de la traverse (41') et destinés à venir en contact respectivement avec les surfaces latérales intérieures de la remorque (3),
- un dispositif capteur de position adapté pour générer un signal de position représentatif de la position de la traverse par rapport à l'axe longitudinal central (A),
- un système d'entraînement relié au capteur et adapté pour déplacer le chariot par rapport à la traverse (41') de manière à centrer le chariot sur la traverse (41') en fonction du signal de position généré par le dispositif capteur de position.

13. Station de lavage (1) selon la revendication 12, dans laquelle les organes de déplacement comprennent au moins deux roues écartées l'une de l'autre selon l'axe transversal, le système d'entraînement comprenant au moins deux moteurs adaptés pour entraîner respectivement les roues à des vitesses adaptées pour centrer le chariot sur la traverse (41').

14. Station de lavage (1) selon l'une quelconque des revendications 11 à 13, dans laquelle la traverse (41, 41') comprend un dispositif de réglage adapté pour régler un écartement selon l'axe transversal entre les organes de guidage (42, 42'), le dispositif de réglage comprenant en particulier :
- deux arbres de liaison (55) montés coulissants sur le châssis (31), lesdits arbres de liaison (55) présentant respectivement des premières extrémités adjacentes et des deuxièmes extrémités opposées aux premières extrémités et portant les organes de guidage (42),
- au moins un organe de réglage (56) interposé entre les premières extrémités des arbres de liaison (55), ledit organe de réglage (56) étant élastiquement déformable, et
- un dispositif de blocage adapté pour, dans un état actif, empêcher une déformation de l'organe de réglage (56) et, dans un état inactif, autoriser une déformation de l'organe de réglage (56).

15. Procédé de lavage de camion (2) mettant en oeuvre une station de lavage (1) selon l'une quelconque des revendications 1 à 13, ledit camion (2) comprenant un tracteur (4) et une remorque (3), ladite remorque (3) présentant une extrémité avant solidarisée au tracteur (4) et une extrémité arrière opposée à l'extrémité avant, ledit procédé de lavage comprenant les étapes consistant à :
- déplacer conjointement selon la direction longitudinale (X) les premier (11) et deuxième (21) portiques dans leur position rapprochée, sur la remorque (3) depuis l'extrémité arrière jusqu'à l'extrémité avant,
- lorsque les premier (11) et deuxième (21) portiques atteignent l'extrémité avant de la remorque (3), faire passer les premier (11) et deuxième (21) portiques de leur position rapprochée à leur position écartée, et commander le déplacement selon la direction longitudinale (X) du premier portique (11) sur le tracteur (4), le deuxième portique (21) restant sur la remorque (3),
- déplacer selon la direction longitudinale (X) le chariot de lavage (30), à l'intérieur de la remorque (3) depuis l'extrémité arrière jusqu'à l'extrémité avant.
